# EUROPEAN PATENT APPLICATION

(11) **EP 4 488 873 A1**
(43) Date of publication of application: **08.01.2025**
(21) Application number: 24186501.3
(22) Date of filing: 04.07.2024
(51) Int. Cl.: G06F 30/398, G06F 111/04, G06F 119/02, G06F 119/18

(54) **PRE-DESIGN RULE CHECK (DRC) DETECTION OF SYSTEMATIC DESIGN VIOLATIONS**

(30) Priority: 06.07.2023 US 202318347879
(71) Applicant: Siemens Industry Software Inc., Plano, TX 75024 (US)
(72) Inventor: SERRY, Basma, 11361 Heliopolis, Cairo (EG); HOSSAM, Nermeen Mohamed, 11765 Nasr City, Cairo (EG); SHEHAD, Nadine, 11361 Heliopolis, Cairo (EG); ABERCROMBIE, David A., Apex, NC 27539 (US)
(74) Representative: Horn Kleimann Waitzhofer Schmid-Dreyer Patent- und Rechtsanwälte PartG mbB

(57) **Abstract**

Systems and methods support pre-DRC detection of systemic design violations. A method includes accessing an integrated circuit (IC) design (602), accessing a rule set for a circuit manufacturing process (604), and accessing a pre-check configuration file (606). The pre-check configuration file comprises configuration data to detect a systemic design violation in the IC design, and a systemic design violation comprise a violation of the rule deck of that occurs multiple times in the IC design and is attributable to a same underlying cause. The method further comprises detecting instances of the systemic design violation in the IC design (608).

## Description

### BACKGROUND

Electronic circuits, such as integrated circuits, are used in nearly every facet of modern society, from automobiles to microwaves to personal computers. Design of circuits may involve many steps, known as a "design flow." The particular steps of a design flow are often dependent upon the type of microcircuit being designed, its complexity, the design team, and the circuit fabricator or foundry that will manufacture the circuit. Electronic design automation (EDA) applications support the design and verification of circuits prior to fabrication. EDA applications may implement various EDA procedures, e.g., functions, tools, or features to analyze, test, or verify a circuit design at various stages of the design flow.

### BRIEF DESCRIPTION OF THE DRAWINGS

Certain examples are described in the following detailed description and in reference to the drawings.
Figure 1 shows an example of a computing system that supports pre-design rule check (DRC) detection of systemic design violations.
Figure 2 shows an example detection of systemic design violations by a pre-check engine according to the present disclosure.
Figure 3 shows an example detection of standard cell placement violations by the pre-check engine.
Figure 4 shows an example generation of annotated DRC results using determined systemic design violations.
Figure 5 shows an example generation of filtered DRC results using determined systemic design violations.
Figure 6 shows an example of logic that a computing system may implement to support pre-DRC detection of systemic design violations.
Figure 7 shows an example of a computing system that supports pre-DRC detection of systemic design violations.

### DETAILED DESCRIPTION

As modern circuit designs increase in complexity and capability, verification of both circuit designs and circuit manufacturing processes becomes increasingly challenging. Modern chip designs can have millions of transistors, and the complexity of chip designs is continually increasing as integrated circuits are widely used in various facets of modern society. As the physical sizes of transistors for technology nodes continue to decrease, effective and efficient chip design verification becomes increasingly necessary. As such, a key aspect of modern chip design flows is an effective physical verification platform to verify physical layouts of integrated circuit (IC) designs. Physical verification can refer to a process where an IC design is verified using electronic design automation (EDA) software tools to ensure correct electrical and logical functionality and manufacturability.

DRC (Design Rule Checking) is a fundamental core block in physical verification platforms. Within the physical verification context, DRC processes can ensure the manufacturing feasibility of an IC design by validating the design's geometrical integrity against the design rules of a circuit manufacturing process. Such design rules are often formulated and provided by a chip foundry. In DRC processes, discrepancies between an IC design and a foundry's design rules can result in improper chip manufacture, the presence defects, inoperable ICs, or other pervasive issues. As such, DRC process in EDA software can generate DRC results with determined violations that violate a foundry's rule deck and that can cause faulty chips. In conventional design flows, chip designers often perform DRC processes at the beginning of the verification cycle, often times prior to proceeding to subsequent verifications such as layout versus schematic (LVS) and other verifications.

One challenge faced in modern chip design is the sheer number of violations that may arise when a DRC is first performed for an IC design. During early design stages, circuit designs may be in an exploration phase or floor-planning phase during which little or no verifications have been performed. Such IC designs may be referred to as "dirty" designs since violations will inevitably be present in an unverified circuit design or those undergoing multiple design changes. Such IC designs can begin the verification process through DRC tools of EDA software to check if the physical layouts of the IC designs abide by a foundry's or manufacturing processes' pre-defined set of rules. Unfortunately, at early floor-planning phases, the number of reported DRC violations can be quite large, which may lead to long DRC runtimes and immensely large DRC results database files. Parsing through such an immensely large number of DRC violations can be a daunting task, even for seasoned IC designers.

The debugging process to address initial DRC result violations can be time-consuming and challenging. Due to the sheer number of resultant DRC violations for early-phase IC designs, manual debugging of the violations can require immense amounts of time and user-effort. Moreover, as each DRC violation corresponds to a single error, chip designers may have no choice but to individually address each DRC violation in hopes of the chip design satisfying a foundry's rule deck. As another complication, DRC results are presented individually, without any correlation as to a root cause or systemic issue that caused the reported DRC violation. In certain cases, hundreds, thousands, or millions of DRC violations may be attributable to the same (repeating) design error. Conventional DRC processes and results are unable to detect, assess, or report such root causes, leaving a chip design in the dark as to how to best approach addressing the immensely large number of DRC violations in DRC results. As yet another challenge, modern DRC processes require a full DRC process to be performed in order to generate DRC results for a chip design. A full-chip DRC process can have high resource requirements and lengthy computational latencies, especially for early-stage IC designs. Such long latency to requirements detect even simple DRC violations is a time-consuming process, limiting the efficiency and effectiveness of chip design and verification flows.

The disclosure herein may provide systems, methods, devices, and logic for pre-DRC detection of systemic design violations. As described in greater detail herein, the pre-check violation detection technology of the present disclosure may provide intelligent and effective mechanisms to identify systemic design violations, with the capability to do so prior to any full DRC process is performed on a chip design. As used herein, a systemic design violation may refer to any violation of a rule deck of a manufacturing that occurs multiple times in a chip design, but is attributable to a same underlying cause. Example systemic design violations may include repeated use of a "bad" standard cell, with each individual instance of the standard cell causing a separate DRC violation as well as failure to legalize a particular cell before placement, which can lead to the use of multiple such shifted cells causing repeated violations. As yet another example of a systemic design violation, an erroneous label to nets can spread the same connectivity issue across a chip design.

The pre-check violation detection technology of the present disclosure may provide distinct logic to detect and report systemic design violations in chip designs, and do so independent of (or, in combination with) conventional DRC processes. As such, the pre-check violation detection technology presented herein can support detection and addressing of design issues with increased effectiveness. Detected systemic design violations can be presented to users during a design phase, and thus can be addressed prior to the running of DRC. Doing so may reduce the number of DRC violations in an initial DRC run, potentially significantly so. As such, improved computational efficiency and reduced DRC process latencies can be achieved for EDA systems with the pre-check violation detection technology of the present disclosure. Additionally or alternatively, detected systemic design violations can be used in conjunction with full DRC processes, for example by filtering out any DRC results attributable to detected systemic design violations or by annotating DRC results as to which DRC violations are attributable to detected systemic design violations. Such applications of detected systemic design violations can increase the efficiency of debugging flows as designers can quickly identify root causes, address root causes efficiently, and readily identify one-off DRC violations that require individual care.

These and other aspects of pre-check violation detection technology according to the present disclosure and the technical benefits of such pre-check violation detection technology are described in greater detail herein.

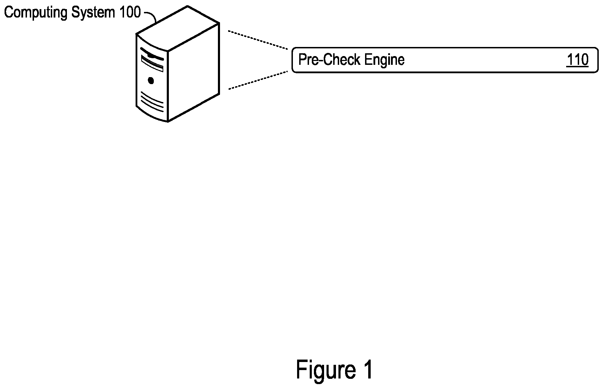

Figure 1 shows an example of a computing system 100 that supports pre-DRC detection of systemic design violations. The computing system 100 may take the form of a single or multiple computing devices such as application servers, compute nodes, desktop or laptop computers, smart phones or other mobile devices, tablet devices, embedded controllers, and more. In some implementations, the computing system 100 hosts, instantiates, executes, supports, or implements an EDA application or EDA system that supports circuit design and analysis, and may accordingly provide or implement any of the pre-check violation detection technology described herein.

As an example implementation to support any combination of the pre-check violation detection technology described herein, the computing system 100 shown in Figure 1 includes a pre-check engine 110. The computing system 100 may implement the pre-check engine 110 (including components thereof) in various ways, for example as hardware and programming. The programming for the pre-check engine 110 may take the form of processor-executable instructions stored on a non-transitory machine-readable storage medium and the hardware for the pre-check engine 110 may include a processor to execute those instructions. A processor may take the form of single processor or multi-processor systems, and in some examples, the computing system 100 implements multiple engines using the same computing system features or hardware components (e.g., a common processor or a common storage medium).

In operation, the pre-check engine 110 may access an IC design and access a rule set for a circuit manufacturing process. The rule set may specify constraints that the IC design is to satisfy for physical manufacture of the IC design. In operation, the pre-check engine 110 may also access a pre-check configuration file, and the pre-check configuration file may include configuration data to detect a systemic design violation in the IC design. A systemic design violation may refer to a violation of the rule deck of that occurs multiple times in the IC design and is attributable to a same underlying cause. The pre-check engine 110 may further detect instances of the systemic design violation in the IC design.

These and other aspects of pre-check violation detection technology according to the present disclosure are described in greater detail next.

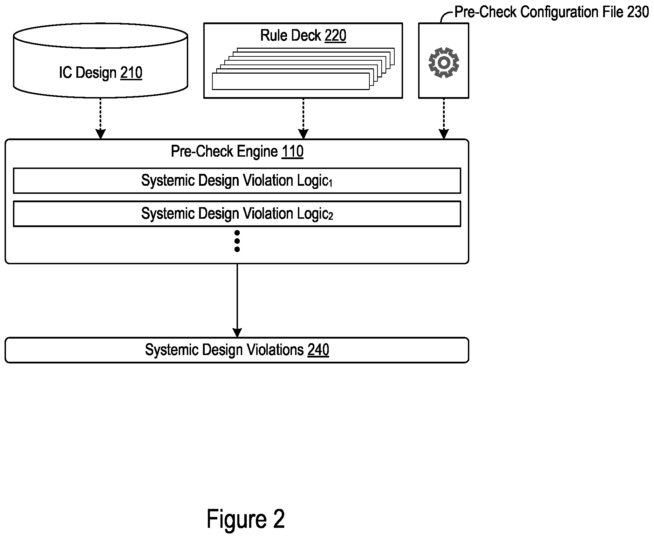

Figure 2 shows an example detection of systemic design violations by a pre-check engine 110 according to the present disclosure. In the example of Figure 2, various features of the pre-check detection technology are described using the pre-check engine 110 as an implementation example. Any suitable implementation of the described pre-check detection technology is contemplated herein.

In supporting pre-check detection of systemic design violations, the pre-check engine 110 may access various inputs. In the example of Figure 2, the pre-check engine 110 accesses an IC design 210, a rule deck 220, and a pre-check configuration file 230. The IC design 210 may be any digital representation of an IC, system-on-a chip (SOC), any other suitable circuit, or any portion thereof. In some examples, the IC design 210 may take the form of a design database with design files that digitally represent a circuit design. The IC design 210 may be "dirty" in that no DRC process has been performed on the IC design 210 or that the IC design 210 has triggered or will trigger DRC violations. The rule deck 220 may include any design rules that are applicable to a circuit manufacturing process. As such, the rule deck 220 may take the form of a rule set provided by a foundry, e.g., for a given technology node. In some implementations, the rule deck 220 may be a selected rule subset of a full rule set of a foundry or technology node. In other implementations, the rule deck 220 may comprise the full rule set.

The pre-check configuration file 230 may take the form of any configuration data that is used by the pre-check engine 110 to detect systemic design violations. For example, the pre-check configuration file 230 may include technology node data (e.g., in addition to the rule deck 220) that the pre-check engine 110 uses to configure logic to detect systemic design violations in IC designs. Any suitable form of configuration data that can be used to detect systemic design violations is contemplated, including according to the various examples presented herein.

To detect systemic design violations, the pre-check engine 110 may implement, include, or otherwise access systemic design violation logic. Systemic design violation logic can be tailored to capture, identify, or otherwise detect a specific known design issue. The pre-check engine 110 may implement distinct instances of systemic design violation logic to detect distinct systemic design violations. For example, the pre-check engine 110 may implement multiple instances of logic, each to detect a separate systemic design violation. Example instances of systemic design violation logic are shown in Figure 2 as systemic design violation logic₁, systemic design violation logic₂, and so forth. The pre-check engine 110 is not limited in the number of systemic design violations it can detect, and which specific systemic design violations that the pre-check engine 110 detects can be configurable. In some implementations, the pre-check engine 110 may implement instances of systemic design violation logic as code (e.g., macros) in a Standard Verification Rule Format (SVRF) or in any other suitable code format.

The pre-check engine 110 may configure a given systemic design violation logic via the particular design rules of the rule deck 220 and the particular configuration data of the pre-check configuration data file 230 applicable to the given systemic design violation logic. The design rules of the rule deck 220 may specify the specific design constraints that the IC design 210 is to meet, and the pre-check engine 110 may configure the given systemic design violation logic to apply the specific constraints applicable to the particular systemic design violation that is being detected by the logic. The particular configuration data of the pre-check configuration data file 230 may include any relevant data that the given systemic design violation logic requires or otherwise uses to detect a given systemic design violation. Through instances of systemic design violation logic, the pre-check engine 110 may detect systemic design violations 240 for an IC design 210.

Some examples of systemic design violations that the pre-check engine 110 may detect are presented next.

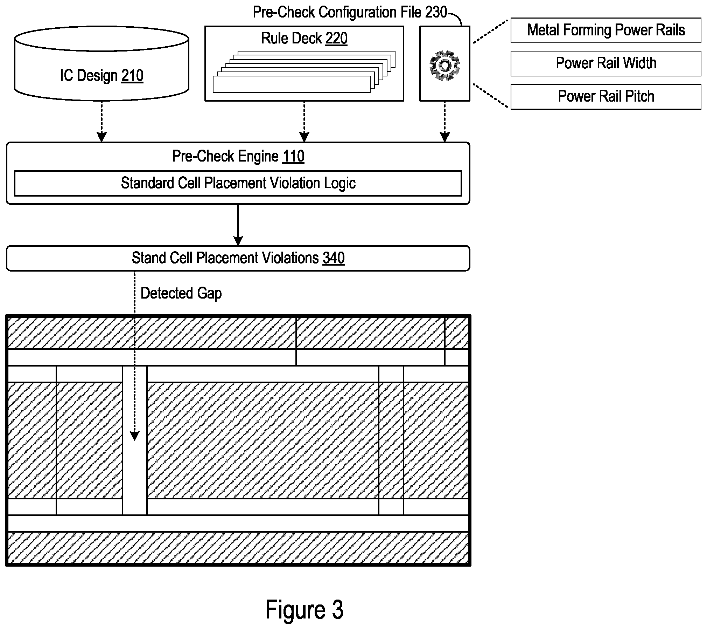

Figure 3 shows an example detection of standard cell placement violations by the pre-check engine 110. Misplacement of standard cells in a circuit design can occur during a place and route (PnR) or clock-cell insertion phase of circuit design. For example, clock cells (which can be standard cells) can be inserted to an IC design and fixed in position. Due to the fixed placement of clock cells (or any standard cell) in an IC design, a place and route tool may be unable to properly snap or legalize fixed cells on a placement grid, which can result in subsequent DRC violations. Such errors can arise because a PnR designer failed to remove the "fixed" designation of placed standard cells (e.g., forgot to use an applicable "unlock" or "unfix" operation on cells). As another possibility, circuit designers perform manual placements of cell, but fail to perform a legalize operation on the placed cells.

Due to a failure to legalize placed standard cells, such cells may not align to a placement grid of an IC design and DRC violations can arise. For example, when a subsequent "filler cell insertion" process is performed on an IC design, gaps between placed standard cells and inserted filler cells can exist as the standard standards were not placed or moved to align with the placement grid. As another issue, fixed standard cells can overlap with other cells (which may likewise be fixed). Each gap in an IC design will be detected by a DRC process as a separate DRC violation. However, such issues may be attributable to the same underlying cause, e.g., standard cells that do not align to a placement grid whether through misplacement or failure to legalize/unlock placed cells.

The pre-check engine 110 may implement systemic design violation logic to detect misplaced standard cells. In the example of Figure 3, the pre-check engine 110 implements the standard cell placement violation logic, which may be configured to detect a particular systemic design violation in the form of standard cell placement violations (e.g., instances thereof). In doing so, the standard cell placement violation logic of the pre-check engine 110 may apply a constant set of criteria set to identify misplaced standard cells, e.g., detection of common attributes/design issues that can be prevalent across multiple technology nodes and circuit designs that exhibit a misplaced standard cell issue. As a particular implementation example, the pre-check engine 110 may configure or implement the standard cell placement violation logic to detect a gap in a circuit layer (e.g., an implant layer, sometimes referred to as a V_{T} layer) on one side of a cell and a layout overlap on another (e.g., opposite) side of the cell.

In operation, the standard cell placement violation logic implemented by the pre-check engine 110 may analyze an implant layer of an IC design to determine whether the IC design has continuous standard and filler cell placement in the layer. To do so, the pre-check engine 110 may access an IC design 210, a rule deck 220 and a pre-check configuration file 230. In support of configuring standard cell placement violation logic to properly detect standard cell placement violations, the accessed pre-check configuration file 230 may include configuration data in the form of identification (e.g., chip location) of metal forming power rails, a power rail width, and a power rail pitch. Such configuration data values may be specific to a technology node in which the IC design 210 is designed for manufacture.

Through the standard cell placement violation logic, the pre-check engine 110 may identify regions of a circuit design at which standard cells and filler cells should be continuously placed between the metal power rails. Identification of metal power rails and their corresponding characteristics is possible through the accessed configuration data, and the pre-check engine 110 may configure the standard cell placement violation logic to identify the metal power rails at the specific locations specified by the pre-check configuration data file 230. In the circuit region between the metal power rails on an implant layer, the standard cell placement violation logic may check the circuit design for any gaps. If such a gap occurs and is detected by the standard cell placement violation logic of the pre-check engine 110, then the pre-check engine 110 may determine an instance of a standard cell placement violation.

In the example of Figure 3, the pre-check engine 110 determines instances of standard cell placement violations 340 for an IC design 210. As the standard cell placement violation logic may parse through an entire circuit design to detect a particular type of systemic design violation, each instance of the detected violations by the standard cell placement violation logic may be classified as a standard cell placement violation. Thus, for an IC design in which tens, hundreds, thousands, or more of such standard cell misplacement issues arise, the pre-check engine 110 can efficiently classify each of those violations detected by the standard cell placement violation logic as attributable to the same underlying root issue, which can improve debug efficiency and the overall effectiveness of IC design flows.

The pre-check engine 110 may present detected systemic design violations in various ways. In some implementations, the pre-check engine 110 may generate or visualize markers in an IC design at which detected systemic design violations have been detected. For example, the pre-check engine 110 may identify a gap in a particular circuit portion in the circuit portion shown in Figure 3, and thus detect an instance of a standard cell placement violation at that particular circuit location. The pre-check engine 110 may visualize the detected violation by annotating or otherwise visualizing the IC design 210 with a marker at which the detected violation occurs. Moreover, as the pre-check engine 110 can detect systemic design violations, the pre-check engine 110 can advantageously visualize detected violations attributable to the same systemic issue. That way, a designer can quickly and efficiently identify (e.g., through visual markers) all of the design issues/DRC violations that are caused by the same underlying root cause and efficiently address the issues as such.

While standard cell misplacement is but one example of a systemic design violation that the pre-check engine 110 can detect, any number of additional or alternative systemic design violations can be detected by the pre-check violation detection technology of the present disclosure. The pre-check engine 110 may configure or implement instances of any suitable systemic design violation logic to detect any suitable systemic design violations.

As another systemic design violation example, the pre-check engine 110 may detect border well tap cell placement violations. Even though the number of DRC violations that may occur in an IC design because of border well tap cell placement may be relatively lesser in number, detection of such violations can be difficult and the pre-check engine 110 may detect and identify such violations accordingly. To detect such systemic violations, the pre-check engine 110 may implement a separate or distinct instance of systemic design violation logic, e.g., border well tap cell placement violation logic implemented as a SVRF macro or in any other suitable format.

To detect border well tap cell placement violations, the pre-check engine 110 may identify constant IC design attributes that occur in such a violation, for example a border gap cell, a well tap cell, and a macro cell. A border gap cell may refer to a subset type of boundary cell, and boundary cells may enclose or surround a macro cell. Such a surrounding of a macro cell by boundary cells may form a "halo" around the macro cell, and oftentimes vertical, horizontal, and corner cell types are used as the boundary cells that surround the macro cell. In IC designs, boundary cells are often represented as physical-only cells, in that such boundary cells do not have a logical definition or function and may be used to provide a DRC-clean interface between macro cells and standard cells at a block level. Border gap cells may be any gap cells that are part of a boundary cells of a macro cell in an IC design.

A well tap cell may also be implemented as a physical-only cell without a logical definition or function, and tap cells may be used in IC designs to connect an 'n' well to V_{DD}, connect 'p' substrate to a Vss connection (e.g., within itself). In previous generations of circuit design, including tap cell features as part of a standard tap cell caused increased area consumption. Thus, to improve area efficiencies, many standard cells are designed as "tapless" standard cell. Such "tapless" standard cells need not include well taping inside the standard cells, with well taping provided by a separate and distinct standard cell, referred to as well tap cells.

Systemic design violations in the form of border well tap cell placement violations can be detected or occur through oxide diffusion (OD) spacing violations, e.g., violations to spacing constraints specifically applicable to an OD layer of an IC design. As such, the pre-check engine 110 may configure border well tap cell placement violation logic to detect border well tap cell placement violations when a border gap cell lies on top of a well tap cell, which causes a discontinuous pattern on an OD layer (which may be referred to as a discontinuous OD pattern). In other words, when the OD pattern of one cell (e.g., a border gap cell) protrudes into part of the OD pattern of another cell (e.g., a wire tap cell), then the pre-check engine 110 may detect a border well tap cell placement violation. Such scenarios may be corner cases, in which cell placement in an IC design is standard, but, by chance, a wire tap cell column is placed at the corner of a macro cell.

To explain further, the pre-check engine 110 may detect border well tap cell placement through capturing the locations of targeted OD spacing violations. Detected OD spacing violations can be performed by making use of the configuration data in the pre-check configuration file 230. Locations of macro cell placements in the IC design is determined, for example by consistent mechanism with standard cell placement violations described which searches for IC design areas where standard cells and filler cells are placed. Instead of standard cell and filler cell placement, the border well tap cell placement violation logic may instead parse such regions to identify macro cell locations. Next, the border well tap cell placement violation logic may extract a halo line (e.g., comprised of boundary cells) for each macro cell. Then, the border well tap cell placement violation logic may use the halo lines together with the technology node-specific configuration data in the form of OD spacing constraints and projection length constraints. In doing so, the border well tap cell placement violation logic may determine the locations of the target OD spacing violations, which may form the detected border well tap cell placement violations. As with any systemic design violation, the pre-check engine 110 may visualize the detected border well tap cell placement violations, which a user can efficiently identify and address accordingly.

While visualization of detected systemic design violations (including prior to performing a full DRC process on a chip design) may provide tangible benefits and effects for circuit design flows, the pre-check engine 110 may implement any number of additional or alternative applications of detected systemic design violations. For example, the pre-check engine 110 may utilize detected systemic design violations in combination with DRC results from a full DRC run. Through such usage, the pre-check engine 110 may allow for intelligent and efficient traversal of DRC results as compared to conventional DRC processes that may merely list occurrences of individually detected DRC violations. Example features of annotated and filtered DRC results via detected systemic design violations are described next.

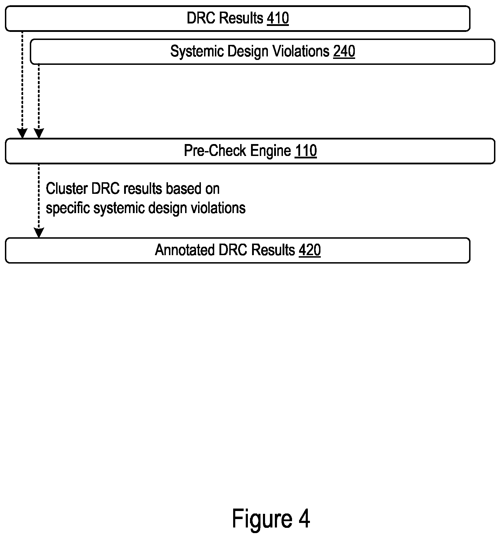

Figure 4 shows an example generation of annotated DRC results using determined systemic design violations. In Figure 4, the pre-check engine 110 may access DRC results 410 of a DRC process performed for an IC design. The DRC process may be a full (e.g., conventional) DRC run that analyzes and detects DRC violations for a chip design based on a foundry's rule set. As noted herein, the DRC results 410 for a "dirty" IC design or an IC design in early design stages may be immensely large, making the DRC results difficult to process, and at times overwhelming. Moreover, the DRC results 410 may merely list individual violations, without any intelligence or insight as to the cause of such detected violations, providing little assistance in debugging efforts to sort through the thousands or millions of individual DRC violations in the DRC results 410.

The pre-check engine 110 may annotate the DRC results 410 using the detected systemic design violations 240 for an IC design. In doing so, the pre-check engine 110 may correlate individual DRC violations with the systemic design violations 240 detected for an IC design. The systemic design violations 240 may include location markers or identifiers for detected violations attributable to a common underlying cause, and the pre-check engine 110 may cluster any DRC results with the same location as a given type of systemic design violation together. Each cluster of DRC results grouped by the pre-check engine 110 may be attributable to a different underlying systemic design violation, and the pre-check engine 110 may annotate the DRC results 410 to indicate, cluster, classify, or otherwise denote groupings of DRC violations that have a common underlying cause.

In the example of Figure 4, the pre-check engine 110 generates the annotated DRC results 420, which may break down or group the DRC results 410 into different systemic design violation classifications (e.g., grouping together the DRC violations that are detected border well tap cell placement violations, that are standard cell placement violations, etc.). As such, the pre-check engine 110 may provide annotated DRC results 420 by clustering the DRC results 410 based on specific systemic design violations detected by the pre-check engine 110. Doing so may improve the efficiency and effectiveness by which IC designs are debugged through DRC results.

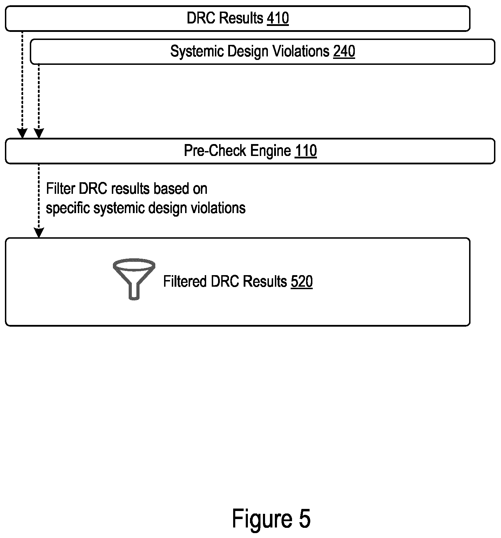

Figure 5 shows an example generation of filtered DRC results using determined systemic design violations. As another example, the pre-check engine 110 may filter DRC results 410 through the systemic design violations 240 detected for an IC design. In some implementations, the pre-check engine 110 may filter (e.g., remove) any DRC violations in the DRC results 410 attributable to a systemic design violation detected by the pre-check engine 110. As such systemic design violations may be attributable to a common cause, filtering such corresponding DRC violations may allow debugging efforts to focus on non-systemic DRC violations, and individually address such issues to clean up IC designs to meet foundry requirements.

As the DRC results 410 can be large and unwieldy, filtering the DRC violations attributable to systemic design violations can allow a user to quickly parse out the specific issues of an IC design that need to be addressed on an individual basis. Such a quick and efficient assessment would not be possible in conventional DRC results that merely list the large number of individual violations, and a user would need to trudge through the immense amount of DRC violations to actually address individual issues in a chip design.

In Figure 5, the pre-check engine 110 generates the filtered DRC results 520 by filtering the DRC results 410 based on specific systemic design violations detected by the pre-check engine 110. The pre-check engine 110 may do so based on any configurable waiver configurations, which may be user-specified or adjustable. Waiver configurations may, for example, specify particular systemic design violations to filter out of the DRC results 410, which systemic design violations (if any) to not filter, or any other suitable configurations. Filtered DRC violations may be stored by the pre-check engine 110 elsewhere (e.g., as separate results data), which can also be accessible and reviewed for debugging efforts.

In any combination of the was described herein, the pre-check engine 110 may detect systemic design violations. Such detection may be performed prior to a full DRC run on an IC design, in combination with (e.g., concurrent to) the full DRC run, or even subsequent to. In some implementations, the pre-check violation detection technology of the present disclosure may be implemented as a part of a DRC flow, e.g., as a pre-check mode option to detect systemic design violations instead of a full DRC run. Through the pre-check violation detection technology of the present disclosure, the effectiveness and efficiency of EDA systems to verify chip designs can be increased. Detection of systemic design violations, especially early in design phases, can allow for cleaner chip designs and addressing of systemic issues at early stages of verification. Full DRC runs may produce (potentially significantly) lesser number of DRC violations as compared to DRC runs on dirty IC designs without the provided pre-check violation detection technology. Decreased DRC computation latency and design debugging times can improve tape out times, allowing for quick and more efficient chip design, improved resource usage, and more effective design flows.

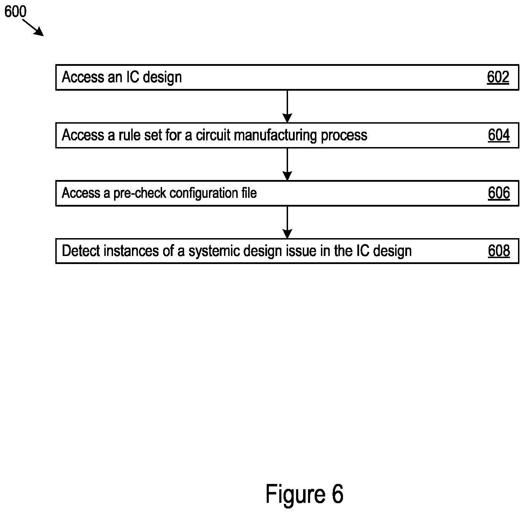

Figure 6 shows an example of logic 600 that a system may implement to support pre-DRC detection of systemic design violations. For example, the computing system 100 may implement the logic 600 as hardware, executable instructions stored on a machine-readable medium, or as a combination of both. The computing system 100 may implement the logic 600 via the pre-check engine 110, through which the computing system 100 may perform or execute the logic 600 as a method to support detection of systemic design violations according to the present disclosure. The following description of the logic 600 is provided using the pre-check engine 110 as an example implementation. However, other implementation options by computing systems are possible.

In implementing the logic 600, the pre-check engine 110 may access an IC design (602) and access a rule set for a circuit manufacturing process (604). The rule set may specify constraints that the IC design is to satisfy for physical manufacture of the IC design. In implementing the logic, the pre-check engine 110 may also access a pre-check configuration file (606), and the pre-check configuration file may include configuration data to detect a systemic design violation in the IC design. A systemic design violation may refer to a violation of the rule deck of that occurs multiple times in the IC design and is attributable to a same underlying cause. In implementing the logic 600, the pre-check engine 110 may further detect instances of the systemic design violation in the IC design (608).

The logic 600 shown in Figure 6 provides an illustrative example by which a computing system 100 may support pre-DRC detection of systemic design violations according to the present disclosure. Additional or alternative steps in the logic 600 are contemplated herein, including according to any of the various features described herein for the pre-check engine 110.

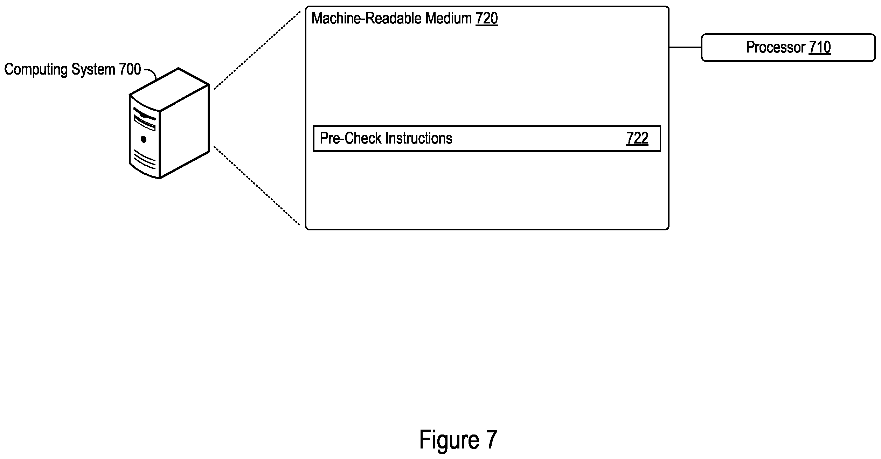

Figure 7 shows an example of a computing system 700 that supports pre-DRC detection of systemic design violations. The computing system 700 may include a processor 710, which may take the form of a single or multiple processors. The processor(s) 710 may include a central processing unit (CPU), microprocessor, or any hardware device suitable for executing instructions stored on a machine-readable medium. The computing system 700 may include a machine-readable medium 720. The machine-readable medium 720 may take the form of any non-transitory electronic, magnetic, optical, or other physical storage device that stores executable instructions, such as the pre-check instructions 722 shown in Figure 7. As such, the machine-readable medium 720 may be, for example, Random Access Memory (RAM) such as a dynamic RAM (DRAM), flash memory, spin-transfer torque memory, an Electrically-Erasable Programmable Read-Only Memory (EEPROM), a storage drive, an optical disk, and the like.

The computing system 700 may execute instructions stored on the machine-readable medium 720 through the processor 710. Executing the instructions (e.g., the pre-check instructions 722) may cause the computing system 700 to perform or implement any of the pre-check violation detection technology described herein, including according to any aspect of the pre-check engine 110.

For example, execution of the pre-check instructions 722 by the processor 710 may cause the computing system 700 to access an IC design, access a rule set for a circuit manufacturing process, and access a pre-check configuration file. As noted herein, the pre-check configuration file may include configuration data to detect a systemic design violation in the IC design and a systemic design violation may refer to a violation of the rule deck of that occurs multiple times in the IC design and is attributable to a same underlying cause. Execution of the pre-check instructions may further cause the computing system 700 to detect instances of the systemic design violation in the IC design, doing so in any of the ways described herein.

Any additional or alternative aspects of the pre-check violation detection technology as described herein may be implemented via the pre-check generation instructions 722.

The systems, methods, devices, and logic described above, including the pre-check engine 110, may be implemented in many different ways in many different combinations of hardware, logic, circuitry, and executable instructions stored on a machine-readable medium. For example, the pre-check engine 110, may include circuitry in a controller, a microprocessor, or an application specific integrated circuit (ASIC), or may be implemented with discrete logic or components, or a combination of other types of analog or digital circuitry, combined on a single integrated circuit or distributed among multiple integrated circuits. A product, such as a computer program product, may include a storage medium and machine-readable instructions stored on the medium, which when executed in an endpoint, computer system, or other device, cause the device to perform operations according to any of the description above, including according to any features of the pre-check engine 110.

The processing capability of the systems, devices, and engines described herein, including the pre-check engine 110, may be distributed among multiple system components, such as among multiple processors and memories, optionally including multiple distributed processing systems or cloud/network elements. Parameters, databases, and other data structures may be separately stored and managed, may be incorporated into a single memory or database, may be logically and physically organized in many different ways, and may be implemented in many ways, including data structures such as linked lists, hash tables, or implicit storage mechanisms. Programs may be parts (e.g., subroutines) of a single program, separate programs, distributed across several memories and processors, or implemented in many different ways, such as in a library (e.g., a shared library).

While various examples and features have been described above, many more implementations are possible.

## Claims

1. A method comprising:
by a computing system (100, 700):
accessing (602) an integrated circuit (IC) design (210);
accessing (604) a rule deck (220) for a circuit manufacturing process, wherein the rule deck (220) specifies constraints that the IC design (210) is to satisfy for physical manufacture of the IC design (210);
accessing (606) a pre-check configuration file (230), wherein the pre-check configuration file (230) comprises configuration data to detect a systemic design violation in the IC design (210), wherein the systemic design violation comprises a violation of the rule deck (220) of that occurs multiple times in the IC design (210) and is attributable to a same underlying cause; and
detecting (608) instances of the systemic design violation in the IC design (210).

2. The method of claim 1, comprising detecting multiple systemic design violations in the IC design (210) through different instances of systemic design violation logic implemented by the computing system (100, 700), wherein each instance of the systemic design violation logic is configured to detect a different systemic design violation.

3. The method of claim 1, further comprising:
generating a location marker for each of the instances of the detected systemic design violation; and
visualizing the location marker in the IC design (210).

4. The method of claim 1, comprising detecting the instances of the systemic design violation in the IC design (210) prior to performing a full design rule check (DRC) run on the IC design (210).

5. The method of claim 1, further comprising:
accessing DRC results (410) from a full DRC run on the IC design (210); and
generating annotated DRC results (420) by clustering DRC violations in the DRC results (410) based on the detected instances of the systemic design violation in the IC design (210).

6. The method of claim 1, further comprising:
accessing DRC results (410) from a full DRC run on the IC design (210); and
generating filtered DRC results (520) by filtering out DRC violations in the DRC results (410) based on the detected instances of the systemic design violation in the IC design (210).

7. The method of claim 1, wherein the pre-check configuration file (230) comprises configuration data specific to a technology node that the IC design (210) is designed for.

8. A system comprising:
a processor; and
a non-transitory machine-readable medium comprising instructions that, when executed by the processor, cause a computing system (100, 700) to:
access an integrated circuit (IC) design (210);
access a rule deck (220) for a circuit manufacturing process, wherein the rule deck (220) specifies constraints that the IC design (210) is to satisfy for physical manufacture of the IC design (210);
access a pre-check configuration file (230), wherein the pre-check configuration file (230) comprises configuration data to detect a systemic design violation in the IC design (210), wherein the systemic design violation comprises a violation of the rule deck (220) of that occurs multiple times in the IC design (210) and is attributable to a same underlying cause; and
detect instances of the systemic design violation in the IC design (210).

9. The system of claim 8, wherein the instructions, when executed, cause the computing system (100, 700) to detect multiple systemic design violations in the IC design (210) through different instances of systemic design violation logic implemented by the computing system (100, 700), wherein each instance of the systemic design violation logic is configured to detect a different systemic design violation.

10. The system of claim 8, wherein the instructions, when executed, further cause the computing system (100, 700) to:
generate a location marker for each of the instances of the detected systemic design violation; and
visualize the location marker in the IC design (210).

11. The system of claim 8, wherein the instructions, when executed, cause the computing system (100, 700) to detect the instances of the systemic design violation in the IC design (210) prior to performing a full design rule check (DRC) run on the IC design (210).

12. The system of claim 8, wherein the instructions, when executed, further cause the computing system (100, 700) to:
access DRC results (410) from a full DRC run on the IC design (210); and
generate annotated DRC results (420) by clustering DRC violations in the DRC results (410) based on the detected instances of the systemic design violation in the IC design (210).

13. The system of claim 8, wherein the instructions, when executed, further cause the computing system (100, 700) to:
access DRC results (410) from a full DRC run on the IC design (210); and
generate filtered DRC results (520) by filtering out DRC violations in the DRC results (410) based on the detected instances of the systemic design violation in the IC design (210).

14. The system of claim 8, wherein the pre-check configuration file (230) comprises configuration data specific to a technology node that the IC design (210) is designed for.

15. A non-transitory machine-readable medium (720) comprising instructions (722) that, when executed by the processor (710), cause a computing system (100, 700) (700) to:
access an integrated circuit (IC) design (210);
access a rule deck (220) for a circuit manufacturing process, wherein the rule deck (220) specifies constraints that the IC design (210) is to satisfy for physical manufacture of the IC design (210);
access a pre-check configuration file (230), wherein the pre-check configuration file (230) comprises configuration data to detect a systemic design violation in the IC design (210), wherein the systemic design violation comprises a violation of the rule deck (220) of that occurs multiple times in the IC design (210) and is attributable to a same underlying cause; and
detect instances of the systemic design violation in the IC design (210).
